## Europäisches Patentamt
## European Patent Office
## Office européen des brevets

(19)

(11) Veröffentlichungsnummer: **0 274 652 B1**

(12) **EUROPÄISCHE PATENTSCHRIFT**

(45) Veröffentlichungstag der Patentschrift: **17.07.91**

(51) Int. Cl.⁵: **B29C 51/08**, B29C 51/26

(21) Anmeldenummer: **87117962.8**

(22) Anmeldetag: **04.12.87**

(54) **Vorrichtung zum Tiefziehen von Folien.**

(30) Priorität: **15.01.87 DE 3700960**

(43) Veröffentlichungstag der Anmeldung:
**20.07.88 Patentblatt 88/29**

(45) Bekanntmachung des Hinweises auf die
Patenterteilung:
**17.07.91 Patentblatt 91/29**

(84) Benannte Vertragsstaaten:
**AT BE CH DE ES FR GB IT LI LU NL SE**

(56) Entgegenhaltungen:
**GB-A- 2 061 806**
**US-A- 3 651 202**
**US-A- 4 076 789**
**US-A- 4 584 157**

**PATENT ABSTRACTS OF JAPAN, Band 7, Nr.
250 (M-254)[1395], 8. November 1983; & JP-
A-58 136 407 (KASAI KOGYO K.K.) 13-08-1983**

(73) Patentinhaber: **J. H. Benecke AG**
**Beneckeallee 40**
**W-3000 Hannover 1(DE)**

(72) Erfinder: **Mente, Kurt**
**Jürgenweg 6**
**W-3000 Hannover 21(DE)**

(74) Vertreter: **Thömen, Uwe, Dipl.-Ing.**
**Patentanwalt U. Thömen Zeppelinstrasse 5**
**W-3000 Hannover 1(DE)**

**Beschreibung**

Die Erfindung betrifft eine Vorrichtung zum Tiefziehen gemäß dem Überbegriff des Anspruchs 1.

Bei geformten Kunststoffelementen, insbesondere bei ausschäumbaren Kraftfahrzeug-Verkleidungen wie Armaturenbretter oder Innenverkleidungen, besteht häufig der Wunsch, auf den jeweiligen Kunststoffelementen aus optischen Gründen eine Ziernaht - oder auch mehrere Ziernähte - vorzusehen. Dieses Ziel läßt sich durch das sogenannte Powder Slush-Verfahren erreichen.

Bei der diesem bekannten Verfahren zugeordneten Vorrichtung wird mit galvanischen Formen für das herzustellende und mit einer Ziernaht versehene Kunststoffelement sowie mit Pulver (pulverisierter Kunststoff) gearbeitet. Durch Schwenkbewegungen der galvanischen Form erfolgt eine Verteilung des Pulvers an der Formwand, und durch eine anschließende Verfestigung des Pulvers läßt sich dann das der galvanischen Form entsprechende Kunststoffelement - z.B. ein Armaturenbrett - erzeugen, und grundsätzlich ist es auch möglich, mit diesem Verfahren Ziernähte herzustellen.

Dem bekannten Powder Slush-Verfahren haften in der praktischen Anwendung allerdings gravierende Nachteile an. Da sich nicht alle Kunststoffe pulverisieren lassen, besteht hinsichtlich des Anwendungsgebietes des bekannten Verfahrens eine Einschränkung. In der praktischen Anwendung müssen außerdem bestimmte Randbedingungen wie Rieselfähigkeit, Kornfestigkeit des Pulvers usw. beachtet werden, weil diese Parameter bei der Herstellung von Kunststoffelementen von erheblicher Bedeutung sind. Auch durch diese Vorgabe tritt in der Praxis eine weitere Einschränkung hinsichtlich des Anwendungsgebietes ein.

Ferner führen die hohen Werkzeugkosten und die Mashinenanschaffungskosten bei dem bekannten Verfahren zu erheblichen Kosten, die sich auf den Preis des gefertigten Kunststoffelementes niederschlagen. Schließlich erfordert die Herstellung eines geformten Kunststoffelementes nach dem Powder Slush-Verfahren einen erheblichen Zeitaufwand, was in wirtschaftlicher Hinsicht ebenfalls ungünstig ist.

Der Erfindung liegt die Aufgabe zugrunde, zur Vermeidung der beschriebenen Nachteile eine Vorrichtung zur Erzeugung von Ziernähten an Kunststoffelementen anzugeben, welche eine kostengünstige und schnelle Fertigung erlaubt.

Die Lösung dieser Aufgabe erfolgt bei der im Oberbegriff des Patentanspruchs 1 vorausgesetzten Vorrichtung durch die Merkmale des kennzeichnenden Teils des Anspruchs.

Durch das Dokument US-A-4 076 789 ist zwar schon eine Vorrichtung gemäß dem Oberbegriff des Patentanspruchs 1 bekannt, jedoch sieht dieses Dokument einen Prägestempel aus hartem Stahl vor, so daß der Prägestempel mit einer harten Oberfläche versehen ist.

Die Verwendung eines Prägestempels aus hartem Stahl hat sich in der Praxis als nachteilig erwiesen, weil die Herstellung des gewünschten Negativs mechanisch durch Gravieren erfolgen muß, indem die Oberfläche des Prägestempels entsprechend bearbeitet wird. Dies bedeutet einen aufwendigen Arbeitsvorgang, wobei es besonders schwierig ist, ein naturgetreues Abbild der Kontur einer Ziernaht, beispielsweise einer Ledernaht, zu erzeugen.

Die Erfindung sieht demgegenüber für den Prägestempel eine aus Voll-Silikongummi bestehende Prägeschicht vor, die beheizbar ausgebildet ist. Im Gegensatz zu der bekannten Vorrichtung ist der Prägestempel also nicht hart, sondern weich ausgebildet.

Die Erfindung bietet den Vorteil, daß es möglich ist, mit dem Silikongummi das gewünschte Negativ der Form direkt von einem Original - insbesondere von einer natürlichen Ledernaht - herzustellen, indem die Silikonmasse als weiche Paste über die Vorlage gestrichen wird, wobei dann auch feinste Konturen der Ledernaht erfaßt und ausgeformt werden. Vergleichbar einem Gipsabdruck wird somit ein exaktes Negativ der Vorlage erreicht. Im Anschluß an die Herstellung des Negativs läßt man die pastöse Silikonmasse aushärten.

Entgegen dem Stand der Technik mit dem aus hartem Stahl bestehenden Prägestempel ist es bei der Erfindung möglich, die Negativ-Form durch einen Abdruck von dem Original herzustellen, so daß die aufwendige mechanische Bearbeitung der Oberfläche des Prägestempels entfallen kann. Dadurch lassen sich sehr genaue und naturgetreue Negativ-Formen erzeugen.

In Ausnutzung des vorausgesetzten Tiefziehverfahrens lassen sich mit Hilfe des beheizten Prägestempels, der mit einer negativen Ziernaht (als Form) versehen ist, und der im Augenblick der Verformung des gesamten Kunststoffelements kurzzeitig gegen das mit der Folie überzogene Formwerkzeug gepreßt wird, optisch sehr saubere Ziernähte erzielen, die praktisch das Aussehen von Original-Nähten besitzen. Ein wichtiges Merkmal ist die Heizung des Prägestempels, die einen für die Verformung optimalen Wärmeübergang ermöglicht.

Durch die Erfindung wird insgesamt ein vorteilhafter Weg zur Herstellung von Ziernähten geschaffen, wobei sich diese Herstellung auf einfache Weise in den Herstellungsprozeß eines geformten Kunststoffelementes integrieren läßt. Der durch den zusätzlichen Prägestempel bedingte Aufwand ist vergleichsweise gering, so daß die neue Vorrichtung auch in wirtschaftlicher Hinsicht von Vorteil ist. Im Vergleich zu dem eingangs erwähnten Powder Slush-Verfahren können bei der Erfindung wesentlich kürzere Fertigungs-Taktzeiten zur Anwendung kommen, wodurch ein weiterer Vorteil gegeben ist.

In einer zweckmäßigen Ausgestaltung der Erfindung ist im Bereich der Ziernaht ein elastisches Prägepolster in die Oberfläche des Formwerkzeuges eingelassen, und der Prägestempel wird dann mit seiner negativen Ziernaht gegen die Folie gepreßt, wobei der Prägestempel auf etwa 160° - 200° C aufgeheizt wird. Durch die genannten Temperaturwerte ist in vorteilhafter Weise sichergestellt, daß die Herstellung von Ziernähten problemlos mit dem Formvorgang des gesamten Kunststoffelementes nach dem vorausgesetzten Tiefziehverfahren in Kombination erfolgen kann.

Um die erforderliche Aufheizung des Prägestempels vornehmen zu können, werden in den Prägestempel eingelassene Drähte verwendet, die elektrisch beheizt werden.

Zum besseren Verständnis wird die Erfindung anhand des in der Zeichnung dargestellten Ausführungsbeispiels näher erläutert. Es zeigen:

Fig. 1    eine schematische Querschnittsansicht einer Vorrichtung zum Herstellen eines geformten Kunststoffelements nach dem vorausgesetzten Tiefziehverfahren,

Fig. 2    eine schematische Darstellung eines von einem Preßluftzylinder angetriebenen Prägestempels zur Erzeugung von Ziernähten, und

Fig. 3    eine Detaildarstellung der in Fig. 2 mit D bezeichneten Einzelheit.

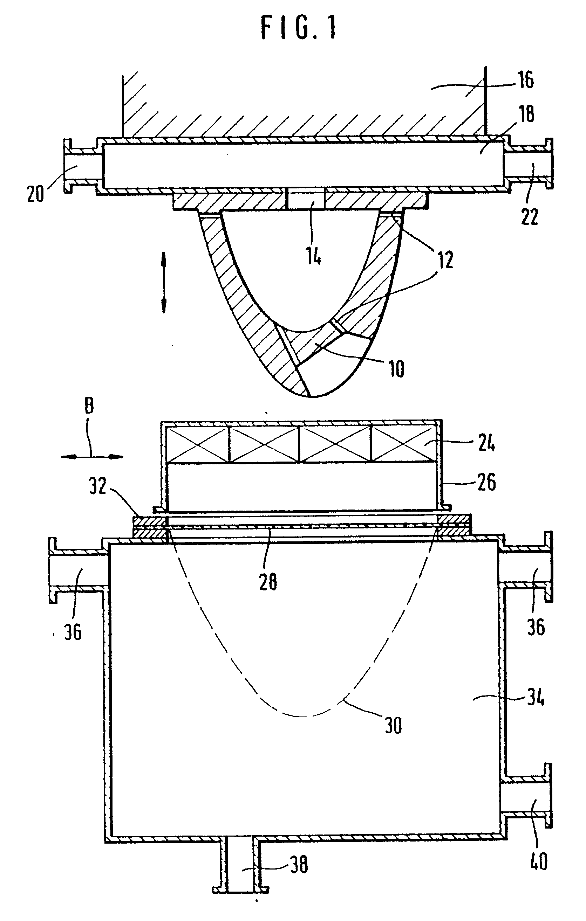

Die in Fig. 1 zeichnerisch dargestellte Vorrichtung zur Durchführung des Verfahrens, von dem die Erfindung ausgeht, umfaßt ein Formwerkzeug 10 mit mehreren Saugöffnungen 12 und 14. Das Formwerkzeug 10 selbst ist an einem Werkzeugträger 16 befestigt, der über einen hier nicht gezeigten Kurbelantrieb vertikal nach oben und nach unten bewegbar ist.

Der Werkzeugträger 16 zur Aufnahme des Formwerkzeuges 10 ist als ein mit Rippen versteifter Kastenträger ausgebildet, dessen Hohlraum 18 über einen Anschluß 20 und über eine flexible Leitung an eine hier mit näher dargestellte Hochvakuumanlage angeschlossen werden kann.

Der Hohlraum 18 mündet ferner in einen weiteren Anschluß 22 mit einem nicht gezeigten Magnetventil ein, welches nach dem Verformungsvorgang einen Druckausgleich mit dem Luftdruck der Umgebungsluft ermöglicht.

Unterhalb des Formwerkzeuges 10 befindet sich in Fig. 1 als Heizquelle ein Infrarotstrahler 24 mit einer seitlichen Abschirmung 26, und durch den Doppelpfeil B ist angedeutet, daß dieser Infrarotstrahler 24 horizontal seitlich verfahrbar angeordnet ist.

Die Vorrichtung umfaßt ferner einen Spannrahmen 32, in dem eine Folie 28 allseitig eingespannt ist. Der Spannrahmen 32 ist oberhalb eines oben offenen Formkastens 34 (Saugkasten) angeordnet, wobei der Spannrahmen 32 ebenfalls seitlich horizontal bewegbar ist.

Der nach oben offene Formkasten 34 besitzt Anschlüsse 36 und 38 für eine Stützluft sowie einen weiteren Anschluß 40, über den innerhalb des Formkastens 34 ein Vakuum erzeugt werden kann. Bei dem vorausgesetzten Verfahren wird ein großer Dickenbereich der Folie 28 erhitzt und in den plastischen Zustand gebracht, und da die Folie 28 im plastischem Zustand eine nur geringe Festigkeit besitzt, wird die erwähnte Stützluft verwendet, um die im Spannrahmen 32 eingespannte Folie 28 von unten mit der Stützluft zu beaufschlagen, um einen Durchhang der Folie während des Aufheizprozeßes zu vermeiden. Im übrigen übernimmt die Stützluft auch noch die Funktion, die geprägte Dekorseite der Folie 28 zu kühlen.

Um die in den Spannrahmen 32 eingespannte Folie 28 zu erhitzen, wird der Infrarotstrahler 24 von der Seite her in die in Fig. 1 gezeigte Position in die Vorrichtung eingefahren. Gleichzeitig wird durch die Anschlüsse 36 Stützluft in den Formkasten 34 geblasen, wobei die Stützluft über die Öffnung 38 nach außen strömen kann. Die Geschwindigkeit der abströmenden Luft ist ein Maß für den sich im Formkasten 34 einstellenden Überdruck, der die Folie 28 während des Aufheizprozeßes trägt.

Die Folie 28 ist so innerhalb des Spannrahmens 32 eingespannt, daß die Dekorseite von dem Infrarotstrahler abgewandt ist; es wird also die Folienrückseite durch den Infrarotstrahler 24 erhitzt. Wenn die gewünschte Verformungstemperatur erreicht ist, werden die Anschlüsse 36 und 38 über hier nicht näher dargestellte Ventile geschlossen, und gleichzeitig wird an den Anschluß 40 Vakuum angelegt. Als Folge davon wird die Folie 28 vorverformt und nimmt etwa die mit der Bezugsziffer 30 durch eine gestrichelte Linie gekennzeichnete Lage ein.

Erst jetzt fährt der Infrarotstrahler 24 seitlich in eine Warteposition außerhalb der Tiefziehvorrichtung, und der Werkzeugträger 16 wird mit dem Formwerkzeug 10 schlagartig in den Formkasten 34 eingeführt. In diesem Augenblick wird an das Formwerkzeug 10 über den Anschluß 20 Hochvakuum angelegt, wobei der andere Anschluß 22 geschlossen bleibt.

Gleichzeitig wird auch der Anschluß 40 geschlossen und der Anschluß 38 geöffnet, so daß sich im Formkasten 34 der Luftdruck der Umgebungsluft einstellt, der die Folie 28 konturentreu an das Formwerkzeug 10 andrückt. Nach einer Abkühlzeit von etwa 30 Sekunden wird der Anschluß 20 geschlossen und der Anschluss 22 geöffnet, so daß sich im Formwerkzeug 10 wieder der Umgebungsluftdruck einstellen kann. Jetzt wird das Formwerkzeug 10 wieder nach oben außerhalb des Formkastens 34 in die in Fig. 1 gezeigte Position gefahren, und dem Spannrahmen 32 kann nunmehr die feriggeformte Tiefziehfolie entnommen werden.

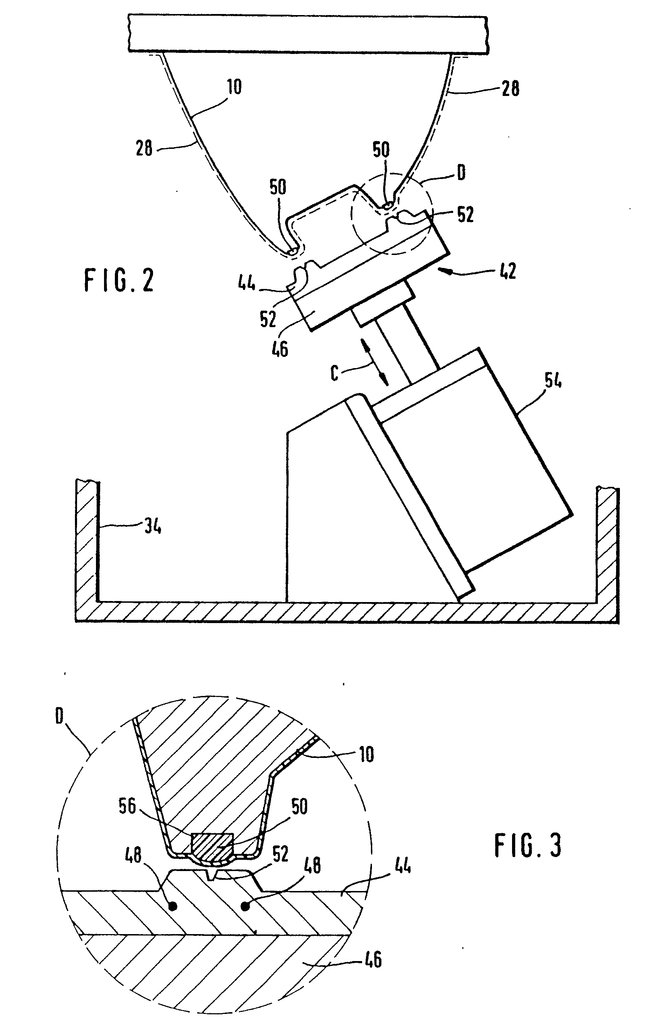

Bei der soweit erläuterten und in der eingangs genannten europäischen Patentanmeldung 86 101 798.6 näher beschriebenen Vorrichtung wird nun gemäß der Darstellung in Fig. 2 innerhalb des Formkastens 34 ein als Ganzes mit der Bezugsziffer 42 bezeichneter Prägestempel angeordnet. Der Prägestempel 42 umfaßt eine obere Prägeschicht 44 die auf einem Stempelträger 46 befestigt ist. Mit Hilfe eines Preßluftzylinders 54 ist der Prägestempel 42 längs des Doppelpfeiles C bewegbar.

Auf der Prägeschicht 44 befinden sich zwei negative Ziernähte 52, die praktisch die Form für die herzustellenden Ziernähte bilden.

Gegenüber den negativen Ziernähten 52 befinden in das Formwerkzeug 10 eingeklebte elastische Prägepolster 50, die in Ausnehmungen 56 (vgl. Fig. 3) des Formwerkzeuges 10 angeordnet sind.

Wie in der Detaildarstellung gemäß Fig. 3 zu erkennen ist, welche die Einzelheit D darstellt, befinden sich innerhalb der Prägeschicht 44 elektrisch beheizbare Drähte 48, wodurch die Prägeschicht 44 erhitzt werden kann. Für die Herstellung von Ziernähten wird der elektrisch beheizte Prägestempel 42 im Augenblick der Verformung mittels des Preßluftzylinders 54 kurzzeitig gegen das mit der Folie 28 überzogene Formwerkzeug 10 gepreßt. Durch das in das Formwerkzeug 10 eingeklebte elastische Prägepolster 50 wird dabei erreicht, daß die Ziernaht nach außen gewölbt wird.

Für die Herstellung des Originals der zu erzeugenden Ziernaht werden echte Lederstücke zusammengenäht und mit einer pastösen Silikongummimasse überzogen, in welche die zur elektrischen Beheizung des Prägestempels 42 vorgesehenen Drähte 48 eingebettet werden. Nach dem Aushärten wird das Silikongummi welches die Prägeschicht 44 bildet - mit der negativen Ziernaht 52 auf den pneumatisch betätigbaren Stempelträger 46 befestigt.

Zur Erzielung einer guten Narbstandfestigkeit wird der Prägestempel 42 bzw. die Prägeschicht 44 auf etwa 160° - 200° C aufgeheizt. Diese hohe Temperatur liegt in aller Regel höher als die spätere Belastungstemperatur des mit der Ziernaht versehenen Kunststoffelementes, so daß die angestrebte thermische Narbstandfestigkeit gewährleistet ist. Außerdem wird durch die Beheizung der Prägeschicht 44 erreicht, daß sich das neue Verfahren ohne weiteres bei dem vorausgesetzten Tiefziehverfahren anwenden läßt.

Die Werkzeugkosten für eine Vorrichtung zur Durchführung des neuen Verfahrens sind weitaus geringer als bei dem eingangs genannten Powder Slush-Verfahren, und darüberhinaus kann bei der Erfindung die Taktzeit im Vergleich mit dem Powder Slush-Verfahren auf etwa 1/6 reduziert werden. In der Praxis lassen sich Zyklen von etwa 1 Minute bei der Erfindung erzielen.

## Patentansprüche

1. Vorrichtung zum Tiefziehen einer von ihrer Rückseite mittels hoher Strahlungsintensität erhitzten Folie aus thermoplastischem Kunststoff insbesondere zu einer Kraftfahrzeugverkleidung, mit einem Spannrahmen zum Halten der Folie und mit einem in einen Formkasten einfahrbaren Formwerkzeug zum Verformen der Folie mittels Druckunterschied, wobei zum Prägen einer Ziehrnaht an der von dem Formwerkzeug (10) abgewandten Vorderseite der Folie (28) ein gegen das Formwerkzeug (10) preßbarer Prägestempel (42) angeordnet ist, deren Prägeoberfläche ein Negativbild (52) der Ziernaht trägt dadurch gekennzeichnet, daß der Prägestempel (42) eine aus Voll-Silikongummi bestehende beheizbare Prägeschicht (44) aufweist.

2. Vorrichtung nach Anspruch 1, dadurch gekennzeichnet, daß für das Beheizen in die Prägeschicht (44) elektrische Heizdrähte (48) eingebettet sind.

3. Vorrichtung nach einem der Ansprüche 1 oder 2, dadurch gekennzeichnet, daß im Bereich der Ziernaht in einer Ausnehmung (56) des Formwerkzeuges (10) ein elastisch, geringfügig über dessen Oberfläche vorragendes Prägepolster (50) eingebettet ist.

## Claims

1. Apparatus for deep-drawing a sheet of thermoplastics material, heated on its rear side by high-intensity radiation, especially for producing an automobile lining, comprising a clamping frame for holding the sheet and a mould traversable into a mould chest for shaping the sheet by pressure difference, wherein, for embossing a decorative seam on the front face of the sheet (28) remote from the mould (10), an embossing plunger (42) which can be pressed against the mould (10) is provided, the embossing surface of which carries a negative image (52) of the decorative seam, characterized in that the embossing plunger (42) possesses a heatable embossing layer (44) of solid silicone rubber.

2. Apparatus according to Claim 1, characterized in that electrical heating wires (48) are embedded in the embossing layer (44) for the heating.

3. Apparatus according to one of Claims 1 or 2, characterized in that, in the region of the decorative seam, an embossing cushion (50), projecting elastically slightly above the surface of the mould (10), is embedded in a recess (56) of the mould.

**Revendications**

1. Dispositif pour la production d'une feuille de plastique thermoplastique chauffée sur son verso au moyen d'une grande intensité de rayonnements, en particulier pour un revêtement de voiture, avec un cadre de tension pour tenir la feuille et un outil de moule qui peut être inséré dans une caisse de moule pour préformer la feuille au moyen d'une différence de pression, caractérisé en ce que pour l'emboutissage d'une piqûre sur le recto de la feuille (28) tournée de l'autre côté de l'outil de moule (10) est disposé un poinçon (42) qui peut presser contre l'outil de formage (10) dont la surface de repoussage porte une image négative (52) de la piqûre, le poinçon d'impression (42) présente une couche d'emboutissage (44) qui peut être chauffée, composée de caoutchouc plein au silicone.

2. Dispositif suivant la revendication 1, caractérisé en ce que, pour le chauffage, sont insérés dans la couche d'emboutissage (44) des fils chauffants électriques.

3. Dispositif suivant la revendication 1 ou 2, caractérisé en ce que dans la zone de la piqûre au creux (56) de l'outil de moulage (10) est inséré un coussin gaufré (50) élastique, léger, en saillie à sa surface.

# FIG.1

FIG.2

FIG.3